# EUROPEAN PATENT SPECIFICATION

(11) **EP 3 750 727 B1**
(45) Date of publication and mention of the grant of the patent: **05.07.2023**
(21) Application number: 19180222.2
(22) Date of filing: 14.06.2019
(51) Int. Cl.: B60J 11/06

(54) **DOOR PROTECTION**
TÜRSCHUTZ
PROTECTION DE PORTE

(43) Date of publication of application: 16.12.2020
(73) Proprietor: Andersen, Leif Carøe, 9400 Nørre Sundby (DK)
(72) Inventor: Andersen, Leif Carøe, 9400 Nørre Sundby (DK)
(74) Representative: Patrade A/S

(56) References cited:
- CA-A1- 2 075 793
- DE-A1-102017 007 649
- FR-A1- 2 882 303
- FR-A1- 2 913 576
- GB-A- 2 437 722
- US-A- 5 320 392
- US-A1- 2010 109 308

## Description

### Field of the Invention

The present invention refers to a door protector to be mounted on the outside of a vehicle door.

### Background of the invention

Door protectors are used to protect the side of vehicles, especially when parking close to other vehicles, such as in a parking lot or on a ferry deck, where the area of parking spaces is very limited. Another example may be when the vehicle is parked along a sidewalk where pedestrians or cyclists, accidentally or intentionally, damage the exterior of the vehicle.

For instance, when vehicles are parked close to each other, extra care must be taken when opening the vehicle door. There is always a risk of opening the vehicle door too much and thereby accidentally hit the neighbouring vehicle. This can happen when, for example, children quickly get out of the vehicle or when the wind pushes the door from inside. In such cases, the vehicle door may hit the side of other vehicles which may pose a risk of damaging both the neighbouring vehicle and the vehicle itself.

Parking damages are often the cause of disagreements between road users. The cost of parking damages is often very high, both economically and temporally, for both the owner of the vehicle and/or the insurance company. Parking damages can eventually lead to increased insurance premium.

Various devices are known to prevent the above-mentioned types of parking damages. Certain vehicles, such as some models of Citro6n Cactus, are factory-fitted with permanent protection on the vehicle sides. Other vehicles are provided with a small protective device on the part of the vehicle door that extends furthest out when the vehicle door is opened. This protective device is usually made of a non-hard plastic type. Thereby, the vehicle door does not damage the vehicle door and/or the neighbouring vehicle.

There are also large commercial magnetic plates that can be mounted more or less permanently along the sides of a vehicle. There are also elongated foam pads that can be mounted more or less permanently along the sides of the vehicle.

The document US2017113530 describes a door protection device for vehicles in the form of a removable outer protection. The door protection device includes an elongated panel. The panel may consist of a foam pad containing flexible polymer.

The foam pad is attached to the front of the panel throughout the length of the panel. One or more magnetic strips are attached to the back of the foam pad throughout the length of the foam pad.

The door protection device may include hinges. The panel's first and second portions may be connected to the hinges. The door protection device may also include an anti-theft system consisting of a line attached to the panel at the proximal end and an anchor attached to the line at the distal end.

The document KR20160118997 describes a door protector with an articulated, foldable protective surface that is composed of a box-shaped storage part. When the protective surface is not in use, the protective surface is folded up and stored in a box. The protective surface is part of the box itself. When the protective surface is folded up, the protective surface/box becomes suitable for storage.

Another known door protector for vehicles is described in US5129695A. It consists of a back sheet and a top sheet. A shock-absorbing material on the top sheet faces the side. Two flexible magnetic strips are arranged between the sheets. A velcro strap is placed on the underside of the sheet. A flap of flexible material is attached to the end portion of the sheet. This flap is suitable for applying prints. The door protector can be folded up in half or in three folds.

Another known door protector for vehicles is described in US 2010/0109308 A1. A protective device includes a main body having an impact absorbing region. The protective device also includes a plurality of magnetic segments affixed to the main body providing sufficient magnetic force for attaching the protective device to the vehicle. The protective device is configured for deploying from within a second vehicle parked adjacent to the first vehicle. The protective device is attached to the first vehicle to prevent damage caused by impact from the second vehicle. The impact absorbing region preferably includes two horizontally aligned foam tubes and a foam strip located between the two foam tubes.

### Object of the invention

The purpose of the invention is to provide a foldable detachable door protector that can be detachably mounted on the exterior part of a vehicle door. The door protector must effectively protect the exterior of a vehicle door from outside events that can cause damage, such as dents and scratches, to the vehicle door or lacquer. In addition, the door protector must be able to be easily and quickly mounted on and detached from the side of the vehicle door, and easy to be stored when the door protector is not in use.

### Description of the invention

It is the purpose of the present invention to provide a foldable detachable door protector that can be detachably mounted on the exterior part of the vehicle door. The invention provides a solution for this by introducing a detachable door protector for attachment to an exterior of a vehicle, wherein the door protector comprises a flexible sheet that allows the door protector to be rolled up, where the sheet has a front and a back, where the sheet has a height that extends from the sheet top to the sheet bottom, wherein the sheet has a width extending from a first sheet side to a second sheet side, and where:
- one or more shock absorbing material pieces are attached to the front of the sheet, wherein the shock absorbing material pieces are made of a foamed polymer, and said shock absorbing material is arranged as elongated beads on the front of the sheet with a certain distance between the adjacent beads so that the material may deform laterally upon impact,
- one or more magnetic pieces are attached to the back of the sheet,
- part of the front of the sheet is kept clear of shock absorbing material pieces, where the magnetic pieces are arranged with a gap in between each of the magnetic pieces, where the gap exposes the sheet, where the exposed part of the sheet acts as a hinge joint so that the door protector can be rolled up and where one or more velcro^{®} straps are attached to the back of the sheet, wherein the velcro strap extends from the sheet top or the sheet bottom, where the velcro strap holds the door protector in rolled-up position when the door protector is rolled up by extending around the door protector in a detachable closed grip using the velcro strap's closing abilities.

Shock absorbing material pieces are arranged on or in the front of the sheet. The shock absorbing material covers part of the front side of the sheet. The shape of the shock absorbing material is provided so that the shock absorbing material protrudes from the sheet so that, upon impact, the shock absorbing material will be allowed to undergo a rather large/heavy deformation before the sheet itself is affected.

According to the invention, the shock absorbing material will be arranged as elongated beads on the front of the sheet with a certain distance between the adjacent beads so that the material may deform laterally upon impact.

The door protector is preferably made of lightweight materials with magnets on the back and a foamed polymer on the front, which may be compressed when rolled up and then expand when folded out for use.

The door protector can be used in various ways. For example, the user can remove it from its shelf in the vehicle door, unfold it, open the window, extend the arm and place it on the user's vehicle door, where it is held with magnetic effect. Then the user can open the door against a wall or a vehicle that the user are next to without scratching or denting the neighbouring vehicle, the wall or the door of the user's vehicle. The door protector is so simple to use that even children in the back seat can affix it if asked before opening the door. The idea is that the door protector should fit in all door shelves. In this way, it does not take much space while being at the user's fingertips when needed.

A user may easily open the window and affix the door protector to the vehicle that the user's vehicle is parked next to, and thus protecting both the user's vehicle as well as the neighbouring vehicle, when opening a door.

It is also possible to put the door protector in the user's bag or pocket when leaving the vehicle. Then if the user came back from shopping or the like and found someone parking close to the user's vehicle, the user could put the door protector on so that the user could open the user's door without scratching the user's vehicle or the neighbouring vehicle. In this way, it is possible to park very close to other vehicles, as the user can get in and out of the user's vehicle without damaging the user's vehicle or the vehicle parked next to it.

As an option, the sheet may also be made of paper-like material of plastic or of other types of fabric that is weather-resistant and suitable for being folded many times without causing significant deterioration to its strength. The shock-absorbing material pieces and the magnetic pieces are mounted or otherwise secured to the sheet which, in addition to acting as a fastening pad, also functions as hinges upon rolling, and which outer end portions are made to be printed on. Thus, a simple construction is provided which can be used to prevent damage when parking, is easy to roll up and can be used for advertising.

The door protector effectively protects the exterior of the vehicle door from outside events that can cause damages, such as dents and scratches, to the vehicle's door or lacquer. In addition, the door protector can be easily and quickly mounted on and detached from the side of the vehicle door and can be easily stored when the door protector is not in use.

A velcro strap is placed on the back of the door protector which holds the door protector in the rolled-up position. Thus, the door protector can easily and safely return to the rolled-up position when the door protector is not in use. This opening closure allows the user to handle the door protector easily and quickly.

In a further advantageous embodiment of the invention the number of the magnetic pieces is larger than the number of the shock absorbing pieces of material.

In a still further advantageous embodiment of the invention the magnetic pieces are magnetic strips.

It is advantageous that the magnets consist of tape magnets with such a large holding force that they are able to hold the door protector on the vehicle during normal driving. This ensures that the user would not lose the door protector if the user forgets it on the user's own vehicle.

The shock absorbing material pieces are made fully or partially of a foamed polymer.

The shock absorbing material pieces are made of a foamed polymer. This ensures a lightweight construction with the desired shock-absorbing properties. The shock-absorbing material pieces form shock-absorbing pads that are robust and weather-resistant.

In a still further advantageous embodiment of the invention a cross section of the shock absorbing material piece is arc-shaped so that the centre of the arc is higher than the outside of the cross section.

To make it easy to roll up the door protector, it is advantageous that each cushion of the shock absorbing material is formed with bevelled outer corners facing away from the sheet on the front of the sheet. For example, cross-sectional shapes such as a half-oval or a round curved shape are preferable to a square shape.

In a further advantageous embodiment of the invention the distance on the sheet measured between the sheet top and the sheet bottom is between 150 mm and 300 mm, and wherein the distance on the sheet measured from the first sheet side to the second sheet side is between150 mm and 250 mm.

In order to make it practical and easy to handle, it is advantageous for the door protector in the unfolded position to have a width between 150 and 250 mm and a length of between 150 and 300 mm. For example, the size of the door protector may be similar to an A5 sheet (148 × 210 mm). However, the door protector may have other dimensions, if deemed suitable. It is important for the door protector not to be too large since it is supposed to be able to fit into a door shelf and, if desired, be included in, for example, a pocket or a bag.

In a further advantageous embodiment of the invention, two printable fields are arranged on the front of the sheet, opposite to the magnetic pieces on the back of the sheet.

The two printable fields are designed with prints, where one field can be used for advertisement, and the second field uniquely connects the door protector to the actual vehicle, on which the door protector is detachably attached. Here, the desired combination of advertising value and theft protection can be obtained.

In addition, the door protector can be preferably provided with a unique feature, which provides a representation of the vehicle's number plate in the preferred embodiment. This feature does not ensure 100% protection against theft, but will at least discourage many from stealing from the vehicle to which it belongs. Upon purchasing in a store, if the customer chooses the preferred use of the door protector according to the invention, the customer can request to have the prints he/she desires. For this purpose, a special printer can be used in each store. It is also possible to print labels using a label printer or a regular printer, and then affix them on the door protector. The user can pay to print something on the door protector and the user may get a discount if the user accepted a particular ad text to be printed. The store/seller can for example provide a bonus to customers who choose to print a particular ad.

In a still further advantageous embodiment of the invention the printable fields are wider than the width of the shock absorbing material pieces.

In order to reinforce the printed messages, it is advantageous to make the two fields for printing wider than the other fields where the foam pads are placed.

In a further advantageous embodiment of the invention a protective sheet is wholly or partly fixed to the back of the sheet, wherein the magnetic pieces are arranged between the protective sheet and the flexible sheet.

The magnets may be arranged on the back of the door protector and come in contact with the vehicle's lacquer. Thus, the magnets are made of soft and flexible material that adapts to the vehicle's contours, and should not scratch the lacquer. An additional protective sheet can be arranged on the back of the magnets to ensure that the magnets do not cause any unnecessary scratch to the lacquer.

Another embodiment can be included,
- wherein the shock absorbing material piece has a length extending from the first sheet side to the second sheet side, and wherein the shock absorbing material piece has one or more predefined widths determined from the number of shock absorbing material pieces attached to the sheet;
- wherein the magnetic piece has a length extending from the first sheet side to the second sheet side, and wherein the magnetic piece has one or more predefined widths determined from the number of magnetic pieces attached to the sheet;
- wherein one or more shock absorbing material pieces are attached in a position on the front of the sheet, wherein one or more magnetic pieces are correspondingly attached to the back of the sheet, wherein each magnetic piece has a corresponding length and width equal to that of the opposite shock absorbing material piece.

Parking damages are often the cause of disagreements between road users and result in high costs for both drivers and insurance companies. The door protector will be able to reduce the cost of parking damage, and ultimately also the insurance premiums. In addition to serving as a protection, the door protector functions as a mean of advertising and may have a great marketing value. For example, it can be used as a mean of free advertising in connection with a promotion.

### Description of the Drawing

The invention will be explained in more detail below with reference to the drawings, on which
Fig. 1 shows the door protector as seen from the front.
Fig. 2 shows the door protector as seen from the rear.
Fig. 3 shows the door protector folded.

### Detailed description of the Invention

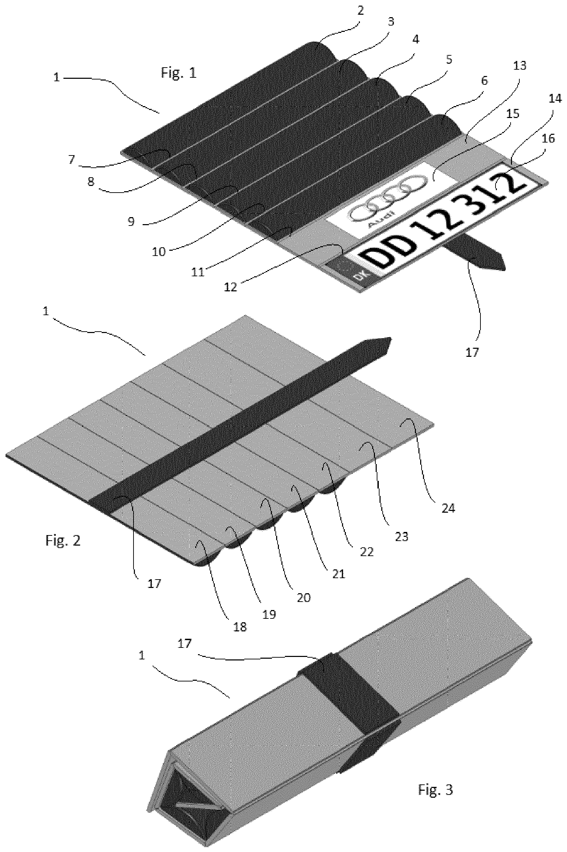

Fig. 1 shows the door protector 1 as seen from the front. Door protector 1 consists of a flexible sheet with a front and a back, none of which is visible in Fig. 1, 2 and 3. The sheet consists of several shock absorbing material pieces 2,3,4,5,6,7 each having a length and a width which, overall, approximately equal to the length and width of the plate. Each of the shock absorbing material pieces 2,3,4,5,6,7 is tiltably connected to each other by the sheet that is shaped as hinges 8,9,10,11,12.

The shock absorbing material pieces 2,3,4,5,6,7 are arranged on the front. The shock absorbing material pieces 2,3,4,5,6,7 partially cover the front of the sheet. The shock absorbing material piece 2,3,4,5,6,7 has a length extending from the first sheet side to the second sheet side, and wherein the shock absorbing material piece 2,3,4,5,6,7 has one or more predefined widths that are determined from the number of shock absorbing material pieces that are attached to the sheet.

The magnetic piece 18-22 has a length extending from the first sheet side to the second sheet side. The magnetic piece has one or more predefined widths that are determined from the number of magnetic pieces attached to the sheet.

One or more of the shock absorbing material pieces 2-7 are secured in a position at the front of the sheet, where, correspondingly, one or more of the magnetic pieces 18-22 are attached to the back of the sheet. The magnetic piece 18-22 has a similar length and width as of the opposite shock absorbing material piece 2-7.

The shock absorbing material piece 2-7 in this example has a geometric shape, which is an approximately halved cylinder, where the cross-section of the shock absorbing material of the cylinders, with a width corresponding to the diameter of the cylinder, is adjacent to the length of the shock absorbing material piece 2-7. The length of the halved cylinder is similar to the length of the shock absorbing material piece 2-7. The shock absorbing material piece 2-7 can be attached to the sheet at intervals between the adjacent shock absorbing material pieces 2-7.

On the back of the sheet, the sheet is provided with magnetic pieces in the form of plates or strips which, when used, may be attached magnetically to the vehicle body. The magnetic piece may be arranged, mixed or otherwise integrated completely or partially into the sheet material. The magnetic piece may be shaped like a robust slat or be a magnetic film that is placed over each of the corresponding back parts of the sheet of the shock absorbing material piece 2-7.

The front of the door protector 1 is at the side facing away from the vehicle door during use. Some of the shock absorbing material pieces 2-6, shaped as arcuate cushions, are arranged on the front of the door protector. These shock-absorbing material pieces 2-6 are preferably made of a resilient material that can protect the exterior of a vehicle door if hit by another vehicle door.

Between the shock absorbing material pieces 2-7, there are thinner tiltable/rotatable parts 7-10, which act as hinges when the door protector is folded up or when the door protector follows the shape of the vehicle door. These thinner parts, in the preferred embodiment, are formed like a sheet such as a foil or a piece of woven or non-woven fabric on which the shock absorbing material pieces 2-7 are preferably glued.

At the bottom, sheet 25 is formed with two panels 13 and 14 without shock absorbing material pieces. Instead, they are printed. A logo of a vehicle model 15 is shown here along with a registration number 16, which is preferably designed as a number plate, which may, for example, correspond to the number plate of the vehicle in question. The end of a velcro strap 17 is shown in front.

On the underside, as can be seen most clearly in Fig. 2, there are seven magnetic pieces 18-24. The first five magnetic pieces 18-22 have essentially the same width, while the last two magnetic pieces 23 and 24 forming the backside of the two printable surfaces 12 and 13 are wider.

The door protector according to the invention is preferably made of lightweight materials with magnets on the back and a foamed polymer on the front. The door protector 1 can be compressed when rolled up and/or folded, and can expand when folded out for use. After rolling up, the door protector 1 is held together by a velcro strap 17.

As can be seen in Figure 1, there is room for commercial printing and, for example, a representation of the license plate on the vehicle on which it is mounted, so if it is to be stolen, it can be seen when reused. One can also imagine that they may be given free of charge if one of the fields is included. The second field will then be printed with an advertising text of the company that issues the giveaway.

In the preferred embodiment, the shock absorbing material pieces 2-6 of the expanded polymer are glued to the front of sheet 25 on which the text can be printed. The magnets 18-24 are then glued to the back and can be called, for example, taped magnet strips. Sheet 25 then acts as hinges 7-12 in the spaces between the foam pads and magnets, respectively, which are placed directly opposite to each other on either side of sheet 25. Sheet 25 can be made of paper-like material of plastic or of other types of fabric that is weather-resistant and suitable for being folded many times without causing significant deterioration to its strength.

In the embodiment shown in the drawings, the size of the door protector is approximately equal to an A5 sheet (148 × 210 mm), but the door protector may have other dimensions, if deemed appropriate. However, according to the present invention, it is important that it is not too large, as it should preferably be able to fit into a door shelf and, if desired, be put, for example, in a pocket or a bag.

As stated above, it is preferable to attach a velcro strap around the door protector. In this way, it is easy to keep the door protector rolled up like a sausage, and it should be ensured that it can fill the door shelf, glove compartment, handbag or pocket at a minimum.

It is most applicable if the door protector is manufactured with such strong magnets on the back. In case the user forgot to remove it after use or chose to leave it on the vehicle, the door protector will remain in position on the vehicle regardless of the speed, wind and weather.

The rolled-up door protector has a front of shock-absorbing material pieces and a back of magnetic pieces to protect the vehicle's sides against dents caused by parking. The shock-absorbing material 2-6 and the magnetic material piece 18-24 are mounted on a preferably weather-proof sheet 25 which, in addition to acting as a fastening pad, also acts as hinges 7-12 when rolled up, and which outer end pieces 13 and 14 are made to be printed on 15 and 16.

A velcro strap 17 is located on the underside of the door protector 1 to hold it in the rolled-up position. The magnets 18-24 that come into contact with the vehicle's lacquer are made of soft and flexible material that adapts to the vehicle's contours and does not scratch the lacquer.

The shock absorbing material that the cushions 2-6 consist of is made of a foamed polymer. The individual pads 2-6 of the shock absorbing material are formed with bevelled outer corners on the front.

Two fields 13 and 14 are designed with print, one field 13 being the advertising part 15 and the other field 14 being the part 16 which essentially and uniquely connects the door protector to the actual vehicle.

The size of the door protector in the unfolded position has a width between 150 and 250 mm and a length between 150 and 300 mm. The magnets 18-24 are magnet strips with such a large holding force that they can hold the door protector on the vehicle during normal driving. The two fields 13 and 14 for prints are wider than the other fields where the foam pads 2-6 are located.

## Claims

1. A detachable door protector (1) for attachment to an exterior surface of a vehicle, wherein the door protector comprises a flexible sheet which allows the door protector (1) to be rolled up, where the sheet has a front and a back, where the sheet has a height extending from the sheet top to the sheet bottom, where the sheet has a width extending from a first sheet side to a second sheet side, where:
- one or more shock absorbing material pieces (2-6) are attached to the front of the sheet, wherein the shock absorbing material pieces (2-6) are made of a foamed polymer, and said shock absorbing material (2-6) is arranged as elongated beads on the front of the sheet with a certain distance between the adjacent beads so that the material may deform laterally upon impact,
- one or more magnetic pieces (18-24) are attached to the back of the sheet,
- part of the front of the sheet is kept clear of shock absorbing material pieces (2-6),
**charaterised in** that
the magnetic pieces (18-24) are arranged with a gap in between each of the magnetic pieces (18-24), where the gap exposes the sheet, where the exposed part of the sheet acts as a hinge joint (7-12) so that the door protector (1) can be rolled up and where one or more velcro^{®} straps (17) are attached to the back of the sheet, wherein the velcro strap (17) extends from the sheet top or the sheet bottom, where the velcro strap (17) holds the door protector (1) in rolled-up position when the door protector (1) is rolled up by extending around the door protector (1) in a detachable closed grip using the velcro straps (17) closing abilities.

2. Detachable door protector according to claim 1 wherein the number of the magnetic pieces (18-24) is greater than the number of shock absorbing material pieces (2-6).

3. Detachable door protector according to any of the preceding claims wherein the magnetic pieces (18-24) are magnetic strips.

4. Detachable door protector according to any of the preceding claims wherein a cross section of the shock absorbing material piece (2-6) is arc-shaped so that the centre of the arc is higher than the sides of the cross section.

5. Detachable door protector according to any of the preceding claims wherein the distance of the sheet measured between the sheet top and the sheet base is between 150 mm and 300 mm, and the distance of the sheet measured from the first sheet side to the second sheet side is between 150 mm and 250 mm.

6. Detachable door protector according to any of the preceding claims wherein two printable fields (15,16) are arranged on the front of the sheet, opposite to the magnetic pieces (23,24) on the back of the sheet.

7. Detachable door protector according to claim 6 wherein, the printable fields (15,16) are wider than the width of the shock absorbing material pieces (2-6).

8. Detachable door protector according to any one of the preceding claims wherein a protective sheet is wholly or partially fixed to the back of the sheet, wherein the magnetic pieces (18-24) are arranged between the protective sheet and the flexible sheet.

9. Detachable door protector according to any of the preceding claims wherein
- the shock absorbing material piece (2-6) has a length extending from the first sheet side to the second sheet side, wherein the shock absorbing material piece (2-6) has one or more predefined widths determined from the number of shock absorbing material pieces (2-6) attached to the sheet;
- the magnetic piece has a length extending from the first sheet side to the second sheet side, wherein the magnetic piece (18-24) has one or more predefined widths determined from the number of magnetic pieces (18-24) attached to the sheet;
- one or more shock absorbing material pieces (2-6) are attached in a position on the front of the sheet, wherein one or more magnetic pieces (18-24) are correspondingly attached to the back of the sheet, wherein each magnetic piece (18-24) has a corresponding length and width equal to that of the opposite shock absorbing material piece (2-6).

## Patentansprüche

1. Abnehmbarer Türschutz (1) zur Anbringung an einer Außenfläche eines Fahrzeugs, wobei der Türschutz ein flexibles Blatt umfasst, welches es ermöglicht, den Türschutz (1) aufzurollen, wobei das Blatt eine Vorder- und eine Rückseite aufweist, wobei das Blatt eine Höhe aufweist, die sich von der Blattoberseite zu der Blattunterseite erstreckt, wobei das Blatt eine Breite aufweist, die sich von einer ersten Blattseite zu einer zweiten Blattseite erstreckt, wobei:
- ein oder mehrere stoßdämpfende Materialstücke (2-6) an der Vorderseite des Blatts angebracht sind, wobei die stoßdämpfenden Materialstücke (2-6) aus einem geschäumten Polymer hergestellt sind und das stoßdämpfende Material (2-6) als längliche Wulste auf der Vorderseite des Blatts mit einem gewissen Abstand zwischen den benachbarten Wulsten angeordnet sind, damit sich das Material beim Aufprall seitlich verformen kann,
- ein oder mehrere Magnetstücke (18-24) auf der Rückseite des Blatts angebracht sind,
- ein Teil der Vorderseite des Blatts von stoßdämpfenden Materialstücken (2-6) freigehalten wird, **dadurch gekennzeichnet, dass**
die Magnetstücke (18-24) mit einem Spalt zwischen jedem der Magnetstücke (18-24) angeordnet sind, wobei der Spalt das Blatt freilegt, wobei der freiliegende Teil des Blatts als Scharniergelenk (7-12) wirkt, damit der Türschutz (1) aufgerollt werden kann und wobei ein oder mehrere Velcro^{®}-Bänder (17) an der Rückseite des Blatts befestigt sind, wobei sich das Klettband (17) von der Blattoberseite oder der Blattunterseite erstreckt, wobei das Klettband (17) den Türschutz (1) in aufgerollter Position hält, wenn der Türschutz (1) aufgerollt ist, indem er sich in einem lösbaren geschlossenen Griff unter Verwendung der Schließfähigkeiten der Klettbänder (17) um den Türschutz (1) erstreckt.

2. Abnehmbarer Türschutz nach Anspruch 1, wobei die Anzahl der Magnetstücke (18-24) größer als die Anzahl der stoßdämpfenden Materialstücke (2-6) ist.

3. Abnehmbarer Türschutz nach einem der vorhergehenden Ansprüche, wobei die Magnetstücke (18-24) Magnetstreifen sind.

4. Abnehmbarer Türschutz nach einem der vorhergehenden Ansprüche, wobei ein Querschnitt des stoßdämpfenden Materialstücks (2-6) bogenförmig ist, damit die Mitte des Bogens höher als die Seiten des Querschnitts ist.

5. Abnehmbarer Türschutz nach einem der vorangehenden Ansprüche, wobei der Abstand des Blatts, der zwischen der Blattoberseite und der Blattbasis gemessen wird, zwischen 150 mm und 300 mm beträgt und der Abstand des Blatts, der von der ersten Blattseite zu der zweiten Blattseite gemessen wird, zwischen 150 mm und 250 mm beträgt.

6. Abnehmbarer Türschutz nach einem der vorhergehenden Ansprüche, wobei zwei bedruckbare Felder (15, 16) auf der Vorderseite des Blatts, gegenüber den Magnetstücken (23, 24) auf der Rückseite des Blatts, angeordnet sind.

7. Abnehmbarer Türschutz nach Anspruch 6, wobei die bedruckbaren Felder (15, 16) breiter als die Breite der stoßdämpfenden Materialstücke (2-6) sind.

8. Abnehmbarer Türschutz nach einem der vorhergehenden Ansprüche, wobei eine Schutzfolie ganz oder teilweise an der Rückseite des Blatts befestigt ist, wobei die Magnetstücke (18-24) zwischen der Schutzfolie und dem flexiblen Blatt angeordnet sind.

9. Abnehmbarer Türschutz nach einem der vorhergehenden Ansprüche, wobei
- das stoßdämpfende Materialstück (2-6) eine Länge aufweist, die sich von der ersten Blattseite zu der zweiten Blattseite erstreckt, wobei das stoßdämpfende Materialstück (2-6) eine oder mehrere vordefinierte Breiten aufweist, die aus der Anzahl von stoßdämpfenden Materialstücken (2-6), die an dem Blatt angebracht sind, bestimmt werden;
- das Magnetstück eine Länge aufweist, die sich von der ersten Blattseite zu der zweiten Blattseite erstreckt, wobei das Magnetstück (18-24) eine oder mehrere vordefinierte Breiten aufweist, die aus der Anzahl von an dem Blatt angebrachten Magnetstücke (18-24) bestimmt sind;
- ein oder mehrere stoßdämpfende Materialstücke (2-6) in einer Position auf der Vorderseite des Blatts angebracht sind, wobei ein oder mehrere Magnetstücke (18-24) entsprechend an der Rückseite des Blatts angebracht sind, wobei jedes Magnetstück (18-24) eine entsprechende Länge und Breite gleich jener des gegenüberliegenden stoßdämpfenden Materialstücks (2-6) aufweist.

## Revendications

1. Protection de porte amovible (1) destinée à être fixée à une surface extérieure d'un véhicule, dans laquelle la protection de porte comprend une feuille souple qui permet d'enrouler la protection de porte (1), où la feuille a une face avant et une face arrière, où la feuille a une hauteur s'étendant du haut de la feuille au bas de la feuille, où la feuille a une largeur s'étendant d'un premier côté de feuille à un second côté de feuille, où :
- une ou plusieurs pièces de matériau absorbant les chocs (2-6) sont fixées sur la face avant de la feuille, dans laquelle les pièces de matériau absorbant les chocs (2-6) sont constituées d'un polymère en mousse, et ledit matériau absorbant les chocs (2-6) est agencé en bourrelets allongés sur la face avant de la feuille avec une certaine distance entre les bourrelets adjacents pour que le matériau puisse se déformer latéralement lors de l'impact,
- une ou plusieurs pièces magnétiques (18-24) sont fixées sur la face arrière de la feuille,
- une partie de la face avant de la feuille est exempte des pièces de matériau absorbant les chocs (2-6), **caractérisée en ce que**
les pièces magnétiques (18-24) sont agencées avec un espace entre chacune des pièces magnétiques (18-24), où l'espace expose la feuille, où la partie exposée de la feuille agit comme un joint articulé (7-12) de sorte que la protection de porte (1) peut être enroulée et où une ou plusieurs bandes velcro^{®} (17) sont fixées sur la face arrière de la feuille, dans laquelle la bande velcro (17) s'étend depuis le haut de la feuille ou le bas de la feuille, où la bande velcro (17) maintient la protection de porte (1) en position enroulée lorsque la protection de porte (1) est enroulée en s'étendant autour de la protection de porte (1) dans une prise fermée amovible à l'aide des capacités de fermeture des bandes velcro (17).

2. Protection de porte amovible selon la revendication 1, dans laquelle le nombre de pièces magnétiques (18-24) est supérieur au nombre de pièces de matériau absorbant les chocs (2-6).

3. Protection de porte amovible selon l'une quelconque des revendications précédentes, dans laquelle les pièces magnétiques (18-24) sont des bandes magnétiques.

4. Protection de porte amovible selon l'une quelconque des revendications précédentes, dans laquelle une section transversale de la pièce de matériau absorbant les chocs (2-6) est en forme d'arc de sorte que le centre de l'arc est plus haut que les côtés de la section transversale.

5. Protection de porte amovible selon l'une quelconque des revendications précédentes, dans laquelle la distance de la feuille mesurée entre le haut de la feuille et la base de la feuille est comprise entre 150 mm et 300 mm, et la distance de la feuille mesurée du premier côté de feuille au second côté de feuille est comprise entre 150 mm et 250 mm.

6. Protection de porte amovible selon l'une quelconque des revendications précédentes, dans laquelle deux champs imprimables (15, 16) sont disposés sur la face avant de la feuille, à l'opposé des pièces magnétiques (23, 24) sur la face arrière de la feuille.

7. Protection de porte amovible selon la revendication 6, dans laquelle les champs imprimables (15, 16) sont plus larges que la largeur des pièces de matériau absorbant les chocs (2-6).

8. Protection de porte amovible selon l'une quelconque des revendications précédentes dans laquelle une feuille de protection est totalement ou partiellement fixée sur la face arrière de la feuille, dans laquelle les pièces magnétiques (18-24) sont disposées entre la feuille de protection et la feuille souple.

9. Protection de porte amovible selon l'une quelconque des revendications précédentes dans laquelle
- la pièce de matériau absorbant les chocs (2-6) a une longueur s'étendant du premier côté de feuille au second côté de feuille, dans laquelle la pièce de matériau absorbant les chocs (2-6) a une ou plusieurs largeurs prédéfinies déterminées à partir du nombre de pièces de matériau absorbant les chocs (2-6) attachées à la feuille ;
- la pièce magnétique a une longueur s'étendant du premier côté de feuille au second côté de feuille, dans laquelle la pièce magnétique (18-24) a une ou plusieurs largeurs prédéfinies déterminées à partir du nombre de pièces magnétiques (18-24) attachées à la feuille ;
- une ou plusieurs pièces de matériau absorbant les chocs (2-6) sont fixées dans une position sur la face avant de la feuille, dans laquelle une ou plusieurs pièces magnétiques (18-24) sont fixées de manière correspondante sur la face arrière de la feuille, dans laquelle chaque pièce magnétique (18-24) a une longueur et une largeur correspondantes égales à celles de la pièce de matériau absorbant les chocs (2-6) opposée.
